Europäisches Patentamt

European Patent Office

Office européen des brevets

(11) Veröffentlichungsnummer: **0 157 195**
**B1**

(12) **EUROPÄISCHE PATENTSCHRIFT**

(45) Veröffentlichungstag der Patentschrift:
**10.08.88**

(51) Int. Cl.⁴: **F 16 J  15/12**

(21) Anmeldenummer: **85102436.4**

(22) Anmeldetag: **05.03.85**

(54) Weichstoffflachdichtung, insbesondere Zylinderkopfdichtung für Verbrennungskraftmaschinen.

(30) Priorität: **17.03.84  DE 3409952**

(43) Veröffentlichungstag der Anmeldung:
**09.10.85 Patentblatt 85/41**

(45) Bekanntmachung des Hinweises auf die Patenterteilung:
**10.08.88 Patentblatt 88/32**

(84) Benannte Vertragsstaaten:
**DE FR GB IT SE**

(56) Entgegenhaltungen:
**DE-A-2 930 715**
**DE-B-1 074 341**
**DE-C-966 913**
**FR-A-2 319 824**
**GB-A-2 014 254**
**US-A-3 794 333**

(73) Patentinhaber: **GOETZE AG, Bürgermeister-Schmidt- Strasse 17, D-5093 Burscheid 1 (DE)**

(72) Erfinder: **Giesen, Franz- Josef, Am Alten Turm 1a, D-5068 Odenthal 3 (DE)**
Erfinder: **Lönne, Klaus, Dipl.- Ing., Bürgemeister-Schmidt- Strasse 50, D-5093 Burscheid (DE)**
Erfinder: **Maus, Karl- Heinz, Dipl.- Ing., Am Oberst 19, D-5600 Wuppertal 11 (DE)**
Erfinder: **Majewski, Klaus- Peter, Dipl.- Ing., Am Sportfeld 26, D-5093 Burscheid (DE)**

## Beschreibung

Die Erfindung betrifft eine Weichstofflachdichtung, insbesondere eine Zylinderkopfdichtung für Verbrennungskraftmaschinen, bestehend alle einem gegebenenfalls metallisch verstärkten und imprägnierten Faservlies mit ein- oder beidseitigen Auflagen ans polymerem Material auf den Dichtflächen.

Weichstoffzylinderkopfdichtungen für Verbrennungskraftmaschinen bestehen vorzugsweise aus gegebenenfalls metallisch verstärkten Faservliesen, die vor allem zur Erhöhung ihrer Querschnittsdichtigkeit und ihrer Festigkeit vielfach mit einem die Poren zu 60 bis 90 Volumenprozent füllenden und vernetzten Imprägniermittel durchsetzt sind.

Zur Erhöhung der Dichtpressung ist es außerdem üblich, die Dichtflächen ein- oder beidseitigmit Auflagen in bestimmten Bereichen zu versehen. So umgeben profilartig sich erhebende ringförmige Auflagen aus elastisch verformbarem Material die Brennraum- oder Flüssigkeitsöffnungen, so daß dort aufgrund der erhöhten Dichtpressung und elastischen Anpassung der Auflagen eine verbesserte Abdichtung entsteht. Ebenso bewirken ringförmige, im Qerschnitt etwa U-förmig über den Dichtrand der Öffnungen gebogene Einfassungen neben einem Schutz der Öffnungsränder auch durch ihre auf den Dichtflächen profilartig aufliegenden Einfassungsschenkel eine erhöhte Dichtpressung und damit Abdichtwirkung.

Beim Einbau der Dichtungen zwischen Motorblock und Zylinderkopf werden bei relativ kleinen Einbaukräften lediglich die profilartigen Auflagen belastet, während die Dichtungsplatte selbst geringer belastet wird und im wesentlichen nur noch eine Trägerfunktion ausübt. Derartig ungleichmäßige Belastungen führen im motorischen Betrieb gegebenenfalls zu Zerstörungen der Auflagen und zu Verzügen der Zylinderlaufflächen. Bei höheren Einbaukräften werden die elastischen Auflagen und der entsprechende Weichstoffbereich über deren Fließgrenzen hinaus belastet, es kommt zum Fließen des Weichstoffes und der Auflagen unter bleibender plastischer Verformung beziehungsweise zu dessen Zerstörung im motorischen Betrieb, und die gewünschte Dichtpressungserhöhung geht verloren.

Nach der DE-A-2 930 715 ist es auch schon bekannt, die im Querschnitt etwa U-förmige über den Brennraumöffnungsgrand gebogenen metallischen Einfassungen durch polymere Auflagen zu ersetzen. Die Auflagen bestehen bevorzugt aus thermisch besonders beständigen Elastomeren oder Duromeren, sie sind mit Abstand zur Brennraumöffnungskante angeordnet und in den Weichstoff einplaniert, so daß sie vor Zerströrungen durch die heißen Brenngase des Motors und vor einem Zerquetschen beim Einbau unter dem Dichtpressungsdruck weitgehend geschützt sind.

Im motorischen Betrieb kommt es vor allem beim Start der Verbrennungskraftmaschine durch das schnelle Erhitzen zu einer unterschiedlichen Wärmeverteilung, insbesondere vom Brennraum ausgehend in vertikaler Richtung. Eine solche unterschiedliche Wärmeverteilung führt ähnlich wie bei einem Bimetalleffekt zu thermischen Verzügen der abzudichtenden Flächen. Zum Ausgleich wird der Zylinderkopf mit Vorspannung mit auf der Dichtung unterschiedlich verteilter Dichtpressungskraft montiert. Die in den bestimmten Bereichen erhöhten Dichtpressungskräfte wirken dann den thermischen Verzügen der Dichtflächen entgegen, und die Gefahr einer Verformung insbesondere der Zylinderkopfdichtflächen wird vermieden.

Nach der DE-B-1 074 341 wird der auf die Dichtung wirkende unterschiedliche Dichtpressungsdruck durch eine von Ort zu Ort unterschiedlich verteilte Verformungscharakteristik erreicht, indem die Dichtung unterschiedlich dick gestaltet wird, eine von Ort zu Ort unterschiedliche Tränkemittelaufnahme erhält oder das Tränkemittel von Ort zu Ort unterschiedlich stark vernetzt wird. In anderen Fällen enthalten die Dichtungen Vertiefungen, um den Druck auf bestimmte Dichtflächenbereiche zu konzentrieren. Allerdings sind die thermischen Verzüge der Dichtflächen der Zylinderköpfe meist so groß, daß zum Ausgleich die Dichtung in den entsprechenden Bereichen mit extrem hoher Druckbelastung verspannt werden muß. Der hohe Druck belastet dann in den bestimmten Bereichen auch die aus der DE-B-1 074 341 bekannten Dichtungen über die Fließgrenze des Weichstoffes hinaus, es kommt dort zum Fließen und zur bleibenden plastischen Verformmung des Weichstoffes, und die gewünschte Vorspannung wird schließlich überhaupt nicht erreicht.

Der vorliegenden Erfindung liegt die Aufgabe zugrunde, eine Weichstofflachdichtung, wie insbesondere eine Zylinderkopfdichtung, zu schaffen, welche vor allem zum Ausgleich der an den Dichtflächen insbesondre der Zylinderkopfe im motorischen Betrieb entstandenen thermischen Verzüge beim Einbau in bestimmten Bereichen bleibend einer erhöhten Montagekraft ohne Gefahr der Zerstörung durch Fließen und plastische Verformung ausgesetzt werden kann. Das Verfahren zur Herstellung der Dichtung soll dabei möglichst einfach und kostensparend sein.

Erfindungsgemäß wird diese Aufgabe durch eine Flachdichtung gelöst, deren Auflagen aus einem druckfesten polymeren Material mit Füllstoffzusätzen zur Erhöhung der Druckfestigkeit versehen sind und deren Auflagen nach dem Auftragen und Aushärten in den Weichstoff der Dichtung weitgehend unter Zuhilfenahme einer Verformung einplaniert sind.

Nach dem Auftragen, Aushärten und Einplanieren der Auflagen wird bevorzugt die Dichtung imprägniert, so daß der Weichstoff unterhalb der Auflagen geschützt ist und weitgehend frei von einfließendem Imprägniermittel bleibt. Es wurde gefunden, daß als druckfestes polymeres Material besonders gut ein Epoxidharz eingesetzt werden kann, welches als verstärkenden Füllstoff zwischen 30 und 80 Gewichtsprozent anorganische, feinkörnige bis pulverige Zusatzstoffe, wie bevorzugt Metalloxide, Silikate und/oder Bariumsulfat, enthält. Gegebenenfalls können zur Steigerung der Druckfestigkeit auch als verstärkende Füllstoffe feste Kunstharzpulver, wie PTFE-Pulver oder anorganische und organische Kurzfasern einzeln oder im Gemisch mit den anderen Füllstoffen eingesetzt werden. Die Dicke der ein- oder beidseitigen Auflagen liegt zwischen etwa 0,01 und 0,2 mm, und sie liegt somit etwa zwischen 1 und 10 % der Gesamtdicke der Dichtung. Bei einem mehrzylindrigen Reihenmotor sind bevorzugt die ein- oder beidseitigen Auflagen in den beiden stirnflächenbereichen der Dichtungen angeordnet, so daß auf diese Weise dem thermischen Dichtflächenverzug sowohl des Zylinderkopfes als auch des Motorblockes durch Aufwölbungen besonders gut entgegengewirkt werden kann; die optimale Lage und Größe der Auflagen ist aber durch den jeweiligen Anwendungsfall bestimmt und muß gesondert jeweils ermittelt werden.

Zur Herstellung der erfindungsgemäßen Auflagen wird das flüssige Epoxidharz mit den Füllstoffzusätzen bevorzugt im Siebdruck- oder Schablonendruckverfahren auf die rohe ausgestanzte Flachdichtungsplatte aufgetragen, das Epoxidharz wird bevorzugt thermisch gehärtet, und die Auflagen werden dann bevorzugt durch Walzen oder Fressen in den Weichstoff mit gewünschtem Überstand einplaniert. Anschließend erfolgt das Imprägnieren und Vernetzen des Imprägniermittels sowie die Fertigstellung der Dichtung in bekannter Weise.

Es wurde gefunden, daß die Dichtung im Bereich der erfindungsgemäßen Auflagen mit extrem hohen Drücken, die bis zu etwa 10 mal so groß sind wie die Druckbelastung im Restflächenbereich, belastet werden kann, ohne daß es zu Zerstörungen und Fließen der Auflagen und des darunter liegenden Weichstoffes kommt. Das die Auflagen bildende, mit Füllstoffen verstärkte Epoxidharz ist gegenüber hohen Drücken und auch gegenüber dem Imprägniermittel stabil. Der Weichstoff unterhalb der Auflagen wird durch das Planieren der Auflagen komprimiert und vor dem Imprägniermittel geschützt, so daß seine Fließgrenze wesentlich größer ist als die Fließgrenze des benachbarten imprägnierten Weichstoffes. Durch die Erfindung ist somit eine Flachdichtung geschaffen, die mit Vorspannung unter hohen Pressungsunterschieden montiert werden kann.

Gerade durch die Anordnung der Auflagen in den Bereichen der Dichtung, in denen sich die Dichtflächen insbesondere der Zylinderköpfe durch thermische Verzüge aufwölben würden, wirkt die hier bei der Montage eingeleitete höhere Dichtpressungskraft dem Verzug der Zylinderköpfe entgegen, und es kommt im Ergebnis überhaupt zu keinem Verzug. Mit der erfindungsgemäßen Dichtung sind somit thermische Verzüge wirkungsvoll ausgleichbar, und sie ist gleichzeitig einfach und kostensparend herzustellen.

Die Erfindung wird anhand der beiden Abbildungen näher erläutert, und zwar zeigt:

Figur 1 die Aufsicht auf eine erfindungsgemäße Zylinderkopfdichtung für einen 4-Zylinder-Reihenmotor

Figur 2 ein Querschnittsbild durch die Dichtung der Figur 1 in der Linie II-II'.

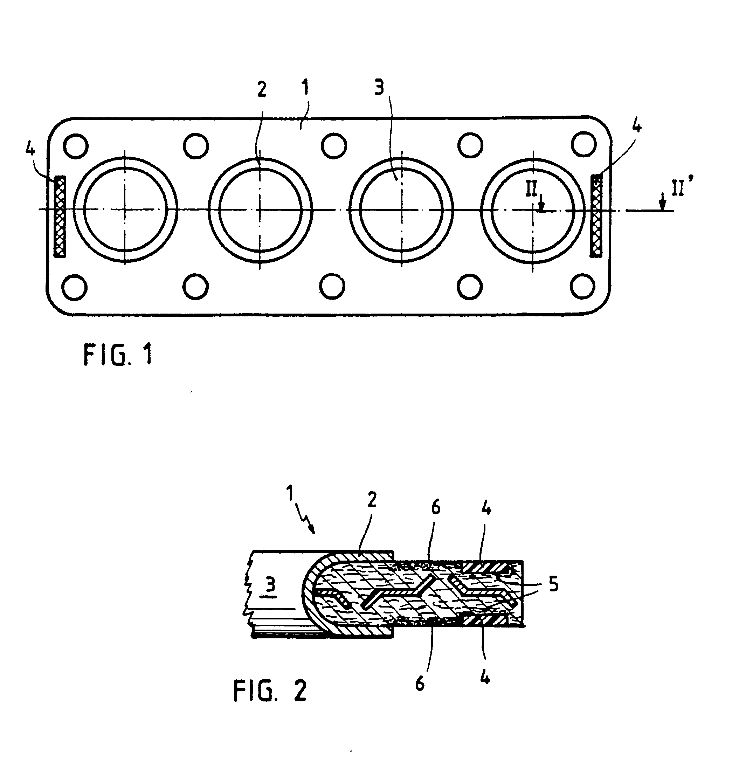

In Figur 1 ist 1 die Zylinderkopfdichtung für einen vierzylindrigen Reihenmotor mit den vier mit metallischen Einfassungen 2 versehenen Brennraumöffnungen 3. An den beiden Stirnflächen der Dichtung 1 sind die beiden druckfesten Auflagen 4 aus verstärktem Epoxidharz angeordnet.

Das Querschnittsbild der Figur 2 zeigt die Dichtung 1 der Figur 1 in der Schnittlinie II-II'. Die beidseitigen Auflagen 4 an der Stirnfläche der Dichtung 1 sind vollständig in den Weichstoff einplaniert, so daß beim nachfolgenden Imprägnieren der komprimierte Weichstoffbereich 5 unterhalb der Auflagen 4 frei von Imprägniermittel 6 bleibt.

**Patentansprüche**

1. Weichstoffflachdichtung, insbesondere Zylinderkopfdichtung für Verbrennungskraftmaschinen, bestehend aus einem gegebenenfalls metallisch verstärkten und imprägnierten Faservlies mit ein- oder beidseitigen partiellen Auflagen aus polymerem Material auf den Dichtflächen, dadurch gekennzeichnet, daß die Auflagen (4) aus dem polymeren Material mit Füllstoffzusätzen zur Erhöhung der Druckfestigkeit versehen sind, und daß die Auflagen (4) nach dem Auftragen und Ausharten in den Weichstoff der Dichtung weitgehend unter Zuhilfenahme einer Verformung einplaniert sind.

2. Weichstoffflachdichtung nach Anspruch 1, dadurch gekennzeichnet, daß die Flachdichtung (1) nach dem Auftragen, Aushärten und Einplanieren der Auflagen (4) imprägniert ist.

3. Weichstoffflachdichtung nach den Ansprüchen 1 und/ oder 2, dadurch gekennzeichnet, daß die Auflagen (4) aus einem Epoxidharz mit 30 bis 80 Gewichtsprozent verstärkten Füllstoffen bestehen.

4. Weichstoffflachdichtung nach mindestens einem der Ansprüche 1 bis 3, dadurch gekennzeichnet, daß als Füllstoffe mineralische, feinkörnige bis pulverige Füllstoffe verwendet werden.

5. Weichstoffflachdichtung nach mindestens einem der Ansprüche 1 bis 4, dadurch gekennzeichnet. daß als Füllstoffe ausgehärtete, feinkörnige bis pulverige Kunstharze verwendet werden.

6. Weichstoffflachdichtung nach mindestens einem der Ansprüche 1 bis 5, dadurch gekennzeichnet, daß als Füllstoffe organische und/oder anorganische Kurzfasern verwendet werden.

7. Weichstoffflachdichtung nach mindestens einem der Ansprüche 1 bis 6, dadurch gekennzeichnet, daß die Dicke der Auflagen (4) zwischen 0,01 und 0,2 mm liegt.

8. Weichstoffflachdichtung nach mindestens einem der Ansprüche 1 bis 7, dadurch gekennzeichnet, daß die Dicke der Auflagen (4) zwischen 1 und 10 % der Gesamtdicke der Dichtung liegt.

9. Weichstoffflachdichtung nach mindestens einem der Ansprüche 1 bis 8, dadurch gekennzeichnet, daß bei einer Zylinderkopfdichtung (1) für einen mehrzylindrigen Reihenmotor die Auflagen (4) ein- oder beidseitig an einer oder beiden Stirnflächen der Dichtung angeordnet sind.

10. Verfahren zur Herstellung der Weichstoffflachdichtung nach mindestens einem der Ansprüche 1 bis 9, dadurch gekennzeichnet, daß auf die rohe und gestanzte Flachdichtungsplatte (1) das flüssige Epoxidharz mit Füllstoffzusätzen nach einem der bekannten verfahren zur Bildung der Auflagen (4) in den gewünschten Zonen aufgetragen wird, und daß die Auflagen (4) nach dem Aushärten durch Fressen oder Walzen mit gegebenenfalls gewünschtem Überstand einplaniert werden.

## Claims

1. Soft material gasket, especially a cylinder head seal for internal combustion engines, consisting of a fibre mat optionally metallically reinforced and impregnated, with coatings of polymer material on one or both sides, characterized in that the coatings (4) of the pressure resistant polymer material are provided with filler additives for enhancing the resistance to pressure and in that, after the application and hardening, the coatings (4) are substantially bedded into the soft material of the seal with the aid of deformation.

2. Soft material gasket according to claim 1, characterized in that the gasket (1) is impregnated after the application, hardening and bedding in of the coatings (4).

3. Soft material gasket according to claim 1 and/or 2, characterized in that the coatings (4) consist of an epoxy resin with 30 to 80 weight percent reinforcing fillers.

4. Soft material gasket according to at least one of claims 1 to 3, characterized in that mineral, fine granular to powder fillers are used as fillers.

5. Soft material gasket according to at least one of claims 1 to 4, characterized in that hardened, fine granular to powder resins are used as fillers.

6. Soft material gasket according to at least one of claims 1 to 5, characterized in that organic and/or inorganic short fibres are used as fillers.

7. Soft material gasket according to at least one of claims 1 to 6, characterized in that the thickness of the coatings (4) lies between 0,01 and 0,2 mm.

8. Soft material gasket according to at least one of claims 1 to 7, characterized in that the thickness of the coatings (4) lies between 1 and 10 % of the total thickness of the seal.

9. Soft material gasket according to at least one of the claims 1 to 8, characterized in that, in a cylinder head seal (1) for a multi-cylinder, in-line engine, the coatings (4) are arranged on one or both sides at one or both end surfaces of the seal.

10. Method of manufacturing the soft material gasket according to at least one of claims 1 to 9, characterized in that the liquid epoxy resin with filler additives is applied to the rough and stamped gasket sheet (1) according to one of the known methods for forming the coatings (4), and in that the coatings (4) are bedded in after hardening by pressing or rolling, with optional desired proudness.

## Revendications

1. Joint d'étanchéité en matériau tendre, en particulier un joint de culasse pour machine à combustion interne, se composant d'un tissu de fibres, le cas échéant rencorcé métalliquement et imprégné, muni d'un revêtement sur l'un ou les deux cotés surfaces d'étanchéité, fait d'un matériau polymère, caractérisé en ce que les revêtements (4) faits du matériau polymère sont munis d'ajouts de matériau de remplissage pour augmenter la résistance à la pression et en ce que les revêtements après l'application et le durcissement, sont considérablement aplatis dans le matériau tendre du joint d'étanchéité à l'aide d'une déformation.

2. Joint d'étanchéité en matériau tendre selon la revendication 1, caractérisé en que le joint d'étanchéité (1) est imprégné après l'application, le durcissement et l'aplatissement des revêtements (4).

3. Joint d'étanchéité selon la revendication 1 et/ou 2, caractérisé en ce que les revêtements (4) sont composés d'une résine époxyde avec 30 à 80 % en poids de matériau de remplissage renforcé.

4. Joint d'étanchéité en matériau tendre selon au moins une des revendications 1 à 3, caractérisé en ce que, en guise de matériau de remplissage, on utilise un matériau de remplissage minéral sous forme de grains plus au moins fins ou sous forme de poudre.

5. Joint d'étanchéité en matériau tendre selon au moins une des revendications 1 à 4, caractérisé en ce que, en guise de matériau de remplissage, on utilise une résine artificielle durcie sous forme de grains plus ou moins fins ou sous forme de poudre.

6. Joint d'étanchéité en matériau tendre selon au moins une des revendications 1 à 5, caractérisé en ce que, en guise de matériau de remplissage, on utilise des fibres courbes organiques et/ou inorganiques.

7. Joint d'étanchéité en matériau tendre selon au moins une des revendications 1 à 6, carctérisé en que l'épaisseur des revêtements (4) est comprise entre 0,01 et 0,2 mm.

8. Joint d'étanchéité selon au moins une des revendications 1 à 7, caractérisé en ce que l'épaisseur des revetements (4) représente 1 à 10 % de l'épaisseur totale du joint d'étanchéité.

9. Joint d'étanchéité en matériau tendre selon au moins une des revendications 1 à 8, caractérisé en ce que, pour un joint d'étanchéité (1) de culasse pour un moteur à plusieurs cylindres en ligne, les revêtements (4) sont déposés sur un ou sur les deux cotés des deux surfaces frontales du joint d'étanchéité.

10. Procédé pour la fabrication de joints d'étanchéité en matériau tendre selon au moins une des revendications 1 à 9, caractérisé en ce que, sur la plaque de joint d'étanchéité (1) brute découpée, la résine époxyde liquide avec le matériau additionnel de remplissage est étendue selon un procédé connu pour former les revêtements (4) dans les zones désirées, et en ce que les revêtements (4) sont aplatis après le durcissement, le cas échéant au niveau souhaité, par pressage ou laminage.

FIG. 1

FIG. 2